Europäisches Patentamt

European Patent Office

Office européen des brevets

(11) Veröffentlichungsnummer: **0 428 963 A1**

## (12) EUROPÄISCHE PATENTANMELDUNG

(21) Anmeldenummer: **90121556.6**

(22) Anmeldetag: **10.11.90**

(51) Int. Cl.5: **A01M 7/00**

(30) Priorität: **24.11.89 DE 3938866**

(43) Veröffentlichungstag der Anmeldung:
**29.05.91 Patentblatt 91/22**

(84) Benannte Vertragsstaaten:
**DE DK FR GB**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) **Landwirtschaftliche Verteilmaschine.**

(57) Landwirtschaftliche Verteilmaschine, wie beispielsweise Feldspritze, mit einem Verteilergestänge, welches über eine Höhenverstelleinrichtung gegenüber dem Rahmen der Verteilmaschine in einer auftrechten Schiebeführung auf-und abbewegbar ist. Um mit einfachsten Mitteln den Rahmen, an dem das Verteilergestänge höhenverstellbar befestigt ist, von bei starr oder mit arretiertem Pendelausgleich angeordneten Verteilergestänge durch versuchte Pendelbewegung auftretende Biegekräfte zu entlasten, ist vorgsehen, daß die Höhenverstelleinrichtung (42) zwei sich kreuzende Ketten (73,74) aufweist, welche jeweils mit ihrem einen Ende an der einen Seite am oberen Ende (75) der Schiebeführung und mit ihrem anderen Ende (76) jeweils auf der gegenüberliegenden Seite (78) der Schiebeführung (3) am unteren Ende (78) der Schiebeführung (3) befestigt sind, daß am Mittelteil (4) des Verteilergestänges im waagerechten Abstand zueinander jeweils drehfest miteinander verbundene und drehbar gelagerte Kettenräder (79,80) angeordnet sind, und daß die beiden Ketten (73,74) unter Kreuzung um diese Kettenräder (79,80) geführt sind.

FIG.12

## LANDWIRTSCHAFTLICHE VERTEILMASCHINE

Die Erfindung betrifft eine landwirtschaftliche Verteilmaschine, wie beispielweise Feldspritze, mit einem Verteilergestänge, welches über eine Höhenverstelleinrichtung gegenüber dem Rahmen der Verteilmaschine in einer aufrechten Schiebeführung auf-und abbewegbar ist.

Derartig ausgebildete landwirtschaftliche Feldspritzen sind in der landwirtschaftlichen Praxis seit langem bekannt. Das Verteilergestänge erstreckt sich zu beiden Seiten der Fahrzeuglängsachse des die Verteilmaschine transportierenden Fahrzeuges. Das Verteilergestänge besteht aus den beiden Verteilergestängehälften, die wiederum aus einzelnen, zueinander ein- und ausklappbaren Abschnitten bestehen. Diese Verteilergestängehälften sind über einen Tragrahmen an dem zentralen Mittelteil der Feldspritze befestigt. Dieser zentrale Tragrahmen des Verteilergestänges ist höhenverstellbar in einer aufrechten Schiebeführung gegenüber dem Maschinentragrahmen gelagert. Der zentrale Tragrahmen ist seinerseits nach Art eines Pendels bezüglich der Fahrzeuglängsachse schwenkbar aufgehängt. Die pendelnde Aufhängung des Tragrahmens ermöglicht es, die symetrisch zueinander ausgeklappten Verteilergestängehälften auch dann in einer annähernd horizontalen Lage zu halten, wenn sich das die Verteilmaschine tragende Fahrzeug mehr oder weniger zur Seite neigt, weil die Räder auf der einen Fahrzeugseite in einer Furche oder sonstigen Vertiefung laufen.

Aus den verschiedensten Gründen kann es nun wünschenswert sein, die Verteilergestängehälften gegebenenfalls unsymetrisch zueinander ausklappen zu können. Hierzu wird dann der pendelnd gegenüber dem Maschinenrahmen aufgehängte zentrale Mittelrahmen, an dem die Verteilergestängehälften angelenkt sind, starr gesetzt, so daß sich die ausgeklappten Verteilergestängeabschnitte stets über das die Verteilmaschine tragende Fahrzeug dem Gelände anpassen. Dieses Starrsetzen des als Pendelrahmen ausgebildeten zentralen Mittelrahmens ist notwendig, weil der zentrale Mittel- bzw. Pendelrahmen bei unsymetrisch ausgeklappten Verteilergestänge ungleichmäßig belastet wird und sich dementsprechend zusammen mit den Verteilergestängehälften schräg stellt, wobei die jeweils ganz bzw. weiter ausgeklappte Verteilergestängehälfte mit seinem freien Ende auf den Boden aufschlägt.

Dieses Starrsetzen des Pendelrahmens hat zur Folge, bzw. tritt auch das gleiche Problem bei nicht pendelnd aufgehängten Verteilergestängen auf, daß sämtliche Stöße und Schwingungen des Fahrzeuges direkt auf die Verteilergestängehälften übertragen werden, wobei die Verteilergestängehälften eine Pendelbewegung ausführen wollen, dieses aber nicht können. Diese versuchte Pendelbewegung wird über das höhenverstellbar in der aufrechten Schiebeführung des Maschinenrahmens auf- und abbewegbar befestigte Mittelteil voll auf diese Schiebeführungen übertragen. Diese versuchten Pendelbewegungen führen dazu, daß die aufrechten Schiebeführungen derart durch Biegekräfte belastet werden, daß es zu Beschädigungen dieser Schiebeführungen kommen kann und die Höhenverstelleinrichtung für das Verteilergestänge nicht mehr ordnungsgemäß funktioniert.

Durch die unsymetrische Anlenkung des Verteilergestänges an dem zentralen Mittelteil versucht die jeweils voll bzw. weiter ausgeklappte Verteilergestängehälfte das zentrale Mittelteil zu verdrehen. Diese Bewegung wird vom Mittelteil auf die aufrechte Schiebeführung übertragen. Wie bereits erwähnt, kann dieses zu Beschädigungen der Schiebeführung führen. Soll nun bei unsymetrisch ausgeklapptem Verteilergestänge die Höhe des Verteilergestänges gegenüber der Bodenoberfläche verändert werden, treten durch die unsymetrisch vom Mittelteil in die Schiebeführung des Maschinenrahmens eingeleiteten Kräfte derart hohe Reibwerte zwischen den miteinander in Wirkverbindung stehenden Bauteilen zwischen dem Mittelteil und der Schiebeführung auf, so daß eine Höhenverstellung gar nicht oder nur unter sehr großem Kraftaufwand durchführbar ist.

Der Erfindung liegt nun die Aufgabe zugrunde, mit einfachsten Mitteln den Rahmen, an dem das Verteilergestänge höhenverstellbar befestigt ist, von bei starr oder mit arretiertem Pendelausgleich angeordneten Verteilergestänge durch versuchte Pendelbewegung auftretende Biegekräfte zu entlasten.

Diese Aufgabe wird in erfindungsgemäßer Weise dadurch gelöst, daß die Höhenverstelleinrichtung zwei sich kreuzende Ketten aufweist, welche jeweils mit ihrem einen Ende an der einen Seite am oberen Ende der Schiebeführung und mit ihrem anderen Ende jeweils auf der gegenüber liegenden Seite der Schiebeführung am unteren Ende der Schiebeführung befestigt ist, daß am Mittelteil des Verteilergestänges im waagerechten Abstand zueinander jeweils drehfest miteinander verbundene und drehbar gelagerte Kettenräder angeordnet sind, und daß die beiden Ketten unter Kreuzung um diese Kettenräder geführt sind.

Infolge dieser Maßnahmen wird in besonders vorteilhafter Weise eine sogenannte Parallelzwangsführung für die Höhenverstelleinrichtung eines Verteilergestänges geschaffen. Hierbei ist es nun ohne weiteres möglich, mit unsymetrisch am Mittelteil angeordneten Verteilergestängehälften zu arbeiten, ohne daß es zu Beschädigungen an der aufrechten Schiebeführung durch bei versuchter Pendelbewegung des Verteilergestänges verursachte Kräfte kommt. Durch die sich kreuzenden Ketten heben sich die durch die ungleichen Momente, hervorgerufen durch die unsymetrisch zueinander ausgefalteten Verteilergestänges auftretenden Kräfte auf. Von den Ketten werden nun nur noch reine Zugkräfte in die Schiebeführung übertragen. Sollen nun die unsymetrisch zueinander ausgeklappten Verteilergestänge in eine andere Höhenlage gegenüber der Bodenoberfläche gebracht werden, ist es hierbei nur notwendig, die Gewichtskraft des Verteilergestänges zu überwinden. Der Kraftfluß wird also nicht von dem Mittelteil, an dem die unsymetrisch zueinander ausgeklappten Verteilergestänge angelenkt sind, direkt auf die Schiebeführung übertragen, so daß es nicht zu den sehr hohen Reibkräften zwischen den direkt miteinander in Wirkverbindung stehenden Bauteilen kommt, sondern die Kräfte werden mittels der Ketten als reine Zugkräfte von oben und unten in die Schiebeführung eingeleitet.

Damit nun eine gleichmäßige Umlenkung der in den Ketten wirksamen Kräfte in die Schiebeführung erfolgt, ist erfindungsgemäß vorgesehen, daß die jeweils miteinander drehfest verbundenen Kettenräder die gleiche Größe aufweisen.

Damit sich nun auf einfachste Weise eine Veränderung der Höhenlage des Verteilergestänges gegenüber der Bodenoberfläche durchführen läßt, ohne die Parallelität der beiden Gestängehälften, unabhängig davon ob sie symetrisch oder unsymetrisch zueinander ausgeklappt sind, zu gewährleisten, ist erfindungsgemäß vorgesehen, daß an einem der Doppelkettenräder eine Antriebsverbindung angreift. Hierbei ist dann erfindungsgemäß vorgesehen, daß diese Antriebsverbindung als mit dem Doppelkettenrad drehfest verbundenes Zahnrad ausgebildet ist, welches mit einer an einem Hubzylinder angeordneten Zahnstange zusammenwirkt. Hierdurch ergibt sich eine äußerst einfache Ausbildung einer Höhenverstelleinrichtung mit gleichzeitiger Parallelzwangsführung des Verteilergestänges, unabhängig davon ob die Verteilergestängehälften symetrisch oder unsymetrisch zueinander ausgeklappt sind. Gleichzeitig wird die Schiebeführung von bei starr oder mit arretiertem Pendelausgleich angeordneten Verteilergestänge durch versuchte Pendelbewegung auftretende Biegekräfte entlastet, da diese als reine Zugkräfte in die Schiebeführung eingeleitet werden.

Damit sich nun eine besonders kompakte Bauweise der Höhenverstelleinrichtung ergibt, ist erfindungsgemäß vorgesehen, daß das mit dem Doppelkettenrad drehfest verbundene Zahnrad einen wesentlich kleineren Durchmesser als die mit dem drehfest verbundenen Zahnräder aufweist. Hierdurch läßt sich also bei kompakter Bauweise der Höhenverstelleinrichtung ein großer Schwenkbereich für die unterschiedlichen Höhen des Verteilergestänges gegenüber der Bodenoberfläche erreichen.

Weitere Einzelheiten der Erfindung sind der Beispielsbeschreibung und den Zeichnungen zu entnehmen. Hierbei zeigt

Fig. 1 die in erfindungsgemäßer Weise ausgebildete Feldspritze mit symetrisch zueinander ausgeklappten Verteilerarmen in der Ansicht von hinten,

Fig. 2 die Feldspritze gemäß Fig. 1 mit unsymetrisch zueinander ausgeklappten Verteilerarmen, wobei der äußere Abschnitt des aus vier einzelnen Abschnitten bestehenden rechten Verteilerarmes eingeklappt ist,

Fig. 3 die Feldspritze gemäß Fig. 1, wobei die beiden äußeren Verteilerarmabschnitte eingeklappt sind,

Fig. 4 die Feldspritze gemäß Fig. 1, wobei sich der rechte Verteilerarm des Verteilergestänges in Transportstellung befindet,

Fig. 5 die Feldspritze gemäß Fig. 1, wobei sich beide Verteilerarme in Transportstellung befinden,

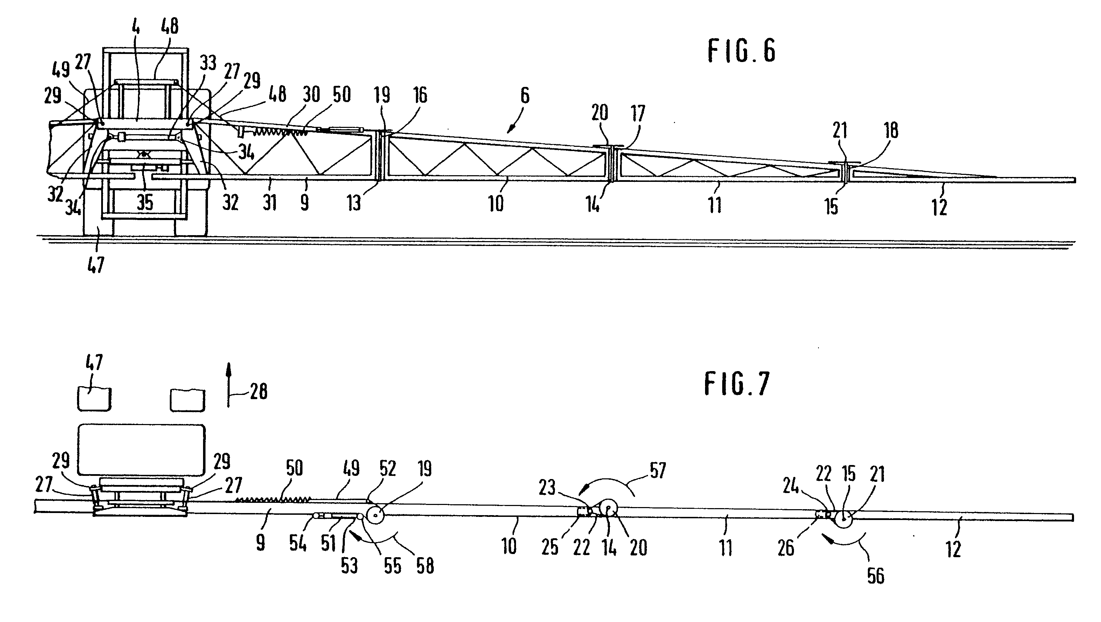

Fig. 6 der rechte Verteilerarm der Feldspritze gemäß Fig. 1 in vergrößertem Maßstab,

Fig. 7 der Verteilerarm gemäß Fig. 6 in der Draufsicht,

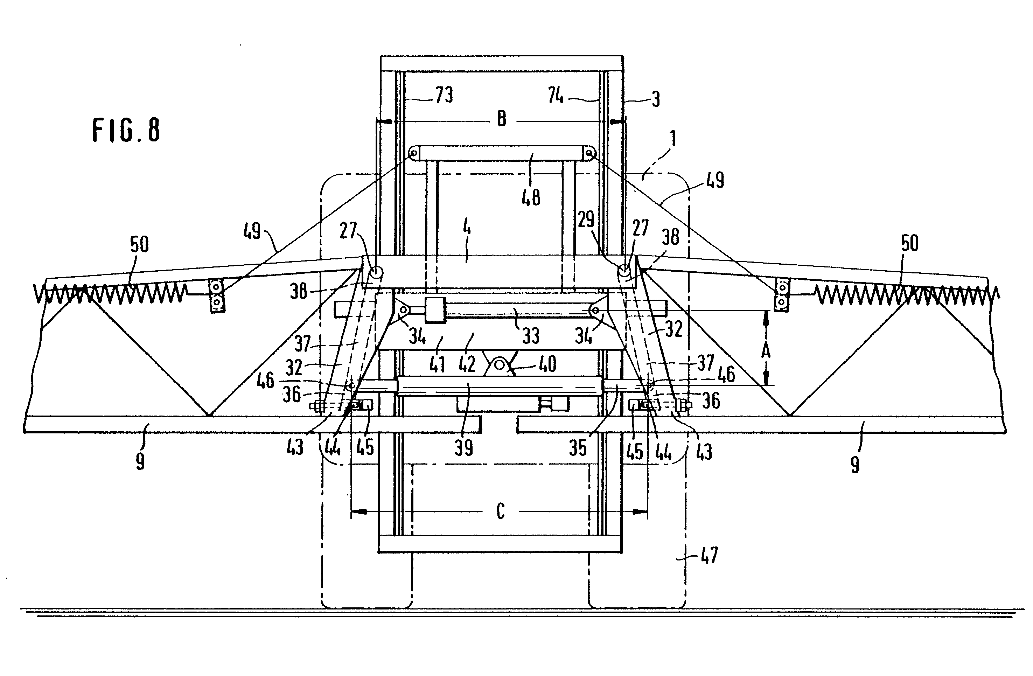

Fig. 8 die Darstellung des Mittelteiles der Feldspritze gemäß Fig. 1 und der teilweisen Darstellung der Verteilerarme,

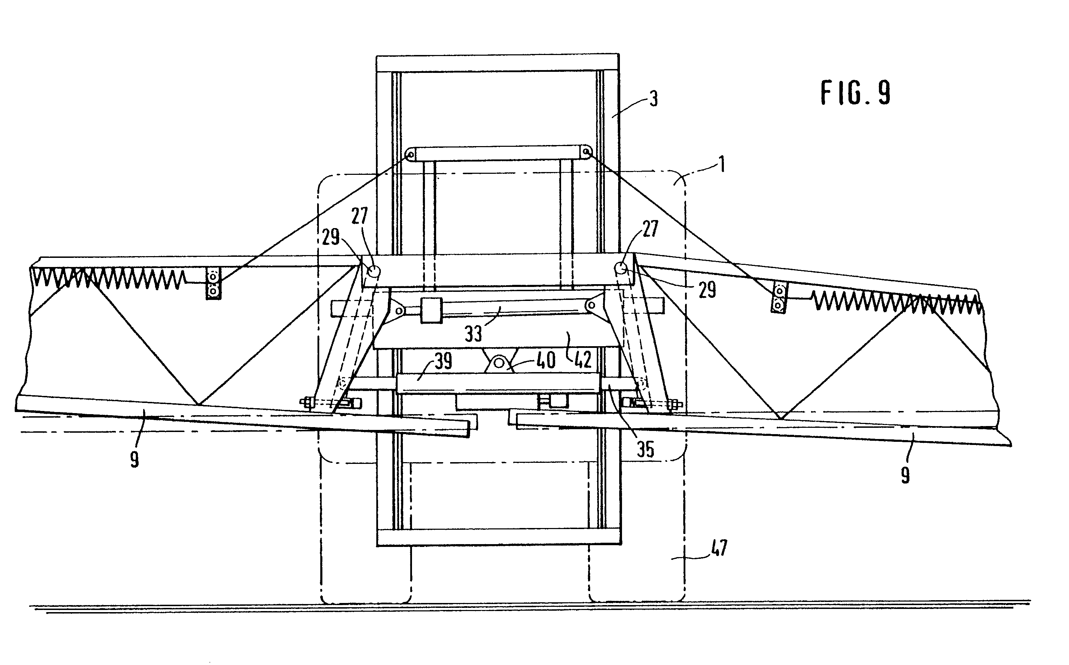

Fig. 9 die Feldspritze gemäß Fig. 8, mit der pendelnden Darstellung der Verteilerarme,

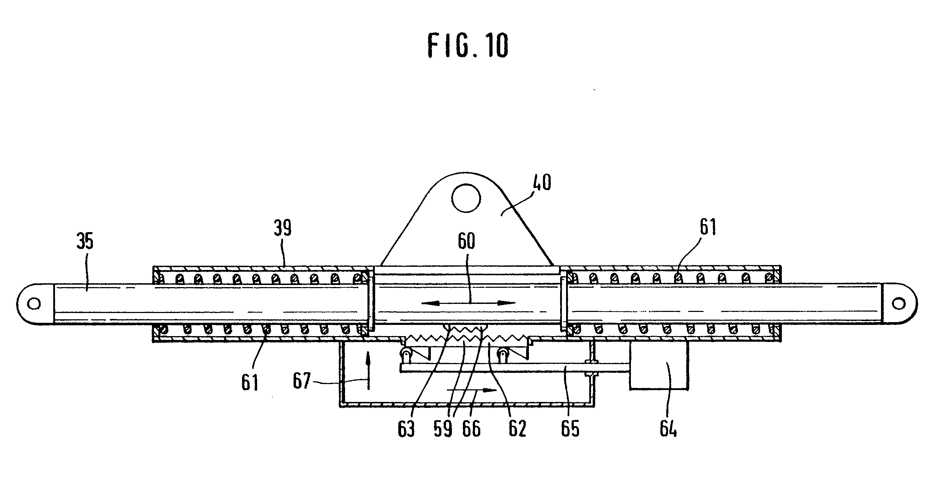

Fig. 10 die Darstellung der die Verteilerarme in Arbeitsstellung haltenden, in einem Abstand zu den oberen Anlenkpunkten der Verteilerarme sich befindlichen Stange in Prinzipdarstellung und vergrößertem Maßstab und

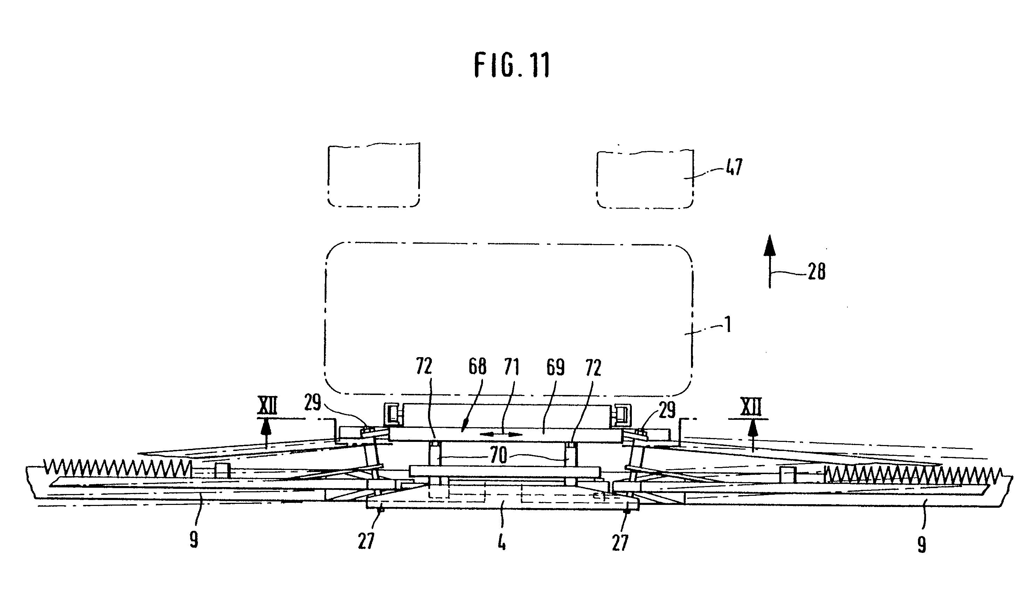

Fig. 11 die Feldspritze gemäß Fig. 8 in der Draufsicht,

Fig. 12 die Feldspritze gemäß Fig. 11 in der Ansicht XII -XII.

Die Feldspritze weist den Flüssigkeitsbehälter 1 auf, der von dem Maschinenrahmen 2 getragen wird. Der Maschinenrahmen 2 weist wiederum die aufrechte Schiebeführung 3 auf, in dem das Rahmenmittelteil 4 höhenbeweglich befestigt ist. An dem Rahmenmittelteil 4 ist jeweils rechts und links der Fahrzeuglängsachse 5 das aus den beiden Verteilerarmen 6 und 7 bestehende Verteilergestänge 8 befestigt. Die Verteilerarme 6 und 7 bestehen jeweils aus den einzelnen Abschnitten 9, 10, 11 und 12. Hierbei sind diese Abschnitte 9, 10, 11 und 12 jeweils mittels der die aufrechten Achsen 13, 14 und 15 aufweisende Gelenke 16, 17 und 18 verbunden. Auf den aufrechten Achsen 13, 14 und 15 dieser Gelenke 16, 17 und 18 befinden sich jeweils die Kettenräder 19, 20 und 21. Über die Kette 22 wirken die den beiden äußeren Auslegersbschnitten 11 und 12 zugeordneten Kettenräder 20 und 21 jeweils mit dem Antriebsritzel 23 bzw. 24 zusammen. Diese Antriebsritzel 23 und 24 sind auf den Ausgangswellen der in den Verteilerarmabschnitten 10 und 11 integrierten Elektromotore 25 und 26 angeordnet.

Der innerste Verteilerarmabschnitt 9 des Verteilerarmes 6 ist mittels des Gelenkes 27 direkt an dem Rahmenmittelteil 4 der Feldspritze angelenkt. Dieses Gelenk 27 weist die annähernd horizontale und annähernd in Fahrtrichtung 28 verlaufende Schwenkachse 29 auf. Die Verteilerarme 6 und 7 sind als Fachwerkkonstruktionen ausgebildet. Der innerste Abschnitt 9 des Verteilerarmes 6 weist das obere und untere Verteilerarmprofil 30 und 31 auf. Die beiden Verteilerarmprofile 30 und 31 die innersten Abschnitte 9 sind über die annähernd aufrecht verlaufende Verbindungsstrebe 32 miteinander verbunden. Zwischen dieser Verbindungsstrebe 32 und dem Maschinenmittelteil ist jeweils das Gelenk 27 angeordnet. Unterhalb der oberen Gelenke 27 ist der die beiden Verbindungsstreben 32 miteinander verbindende Hydraulikzylinder 33, in den an den Verbindungsstreben 32 angeschweißten Halterungen 34 befestigt. Im unteren Bereich der Verteilerarme 6 und 7 werden die Verteilerarme 6 und 7 über die in dem Abstand A zu den oberen Gelenken 27 angeordnete Stange 35 in ihrer Arbeitsstellung gehalten. Diese Stange 35 ist gelenkig an den unteren Enden 36 der aufrechten Streben 37 angelenkt. Die aufrechten Streben 37 sind in ihrem oberen Ende 38 gelenkig an dem Rahmenmittelteil 4 befestigt, in dem sie ebenfalls auf der annähernd in Fahrtrichtung 28 verlaufenden Schwenkachse 29 befestigt sind. Die Stange 35 ist also beweglich gegenüber den Verteilerarmen 6 und 7 am Maschinenrahmen befestigt. Hierbei bewegt sich die Stange 35 in dem Halterungsrohr 39, welches über die Halterung 40 verschwenkbar an dem Gehäuse 41 der zentralen Höhenverstelleinrichtung 42 angelenkt ist.

Die im unteren Bereich 43, der als inneres Teil ausgebildeten Verbindungsstrebe 32 der Verteilerarme 6 und 7, angeordneten einstellbaren Anschlagelemente 44 wirken mit den unteren Enden 45 der aufrechten Streben 37 zusammen. Mittels dieser einstellbaren Anschlagelemente 44 werden die Verteilerarme 6 und 7 in ihrer Arbeitsstellung gehalten, wobei die einstellbaren Anschlagelemente 44 zum Einstellen bzw. Ausgleichen von Fertigungstoleranzen bezüglich der waagerechten Lage der sich in Arbeitsstellung befindlichen Verteilerarme 6 und 7 dient.

Der Abstand der oberen Gelenke 27, mittels derer die Verteilerarme 6 und 7 an dem Rahmenmittelteil 4 angelenkt sind, weisen den Abstand B zueinander auf, der kleiner ist als der Abstand C, den die die Stange 35 anlenkenden Gelenke 46 zueinander aufweisen. Hierdurch ergibt sich die in aufrechter Ebene gegenläufig pendelnd an dem Rahmenmittelteil 4 angeordnete Anlenkung des aus den beiden Verteilerarmen 6 und 7 bestehenden Verteilergestänges 8 mittels einer trapezförmigen Viergelenkanordnung. Dadurch, daß der Abstand der oberen Gelenke 27 einen kleineren Abstand B aufweist als der Abstand der die Stange 35 anlenkenden Gelenke 46 wird erreicht, daß sich das Verteilergestänge 8 stets nach dem Schlepperniveau des die Feldspritze transportierenden Ackerschleppers 47 ausrichtet.

Zwischen dem am Rahmenmittelteil 4 angeordneten Traggerüst 48 und den beiden innersten Verteilerarmabschnitten 9 ist jeweils die als Seil ausgebildete Abspannvorrichtung 49 befestigt. Diese Abspannvorrichtung 49 weist die Zugfeder 50 auf und ist mit der zwischen dem innersten Verteilerarmabschnitt 9 und dem zweitinnersten Verteilerarmabschnitt 10 wirksamen, als Hydraulikzylinder 51 ausgebildeten Betätigungsvorrichtung zum Einfalten dieser beiden Abschnitte 9 und 10 verbunden. Hierbei wird das Seil der Abspannungvorrichtung 49 zunächst um die Umlenkrolle 52 geführt, bevor die Abspannvorrichtung 49 um die mit der aufrechten Achse 13 des die beiden Abschnitte 9 und 10 verbindenden Gelenkes 16 befestigten, als Kettenrad 19 ausgebildeten Scheibe herumgeführt wird. Von hier erfolgt eine weitere Umlenkung der Abspannvorrichtung um die Umlenkrolle 53 bevor die Abspannvorrichtung 49 zu der an der Kolbenstange des Hydraulikzylinders 51 befestigen Umlenkrolle 54 gelangt. Hier erfolgt die letzte Umlenkung der Abspannvorrichtung 49, deren Ende 55 nun fest mit dem innersten Abschnitt 9 bzw. mit dem Hydraulikzylinder 51 verbunden wird.

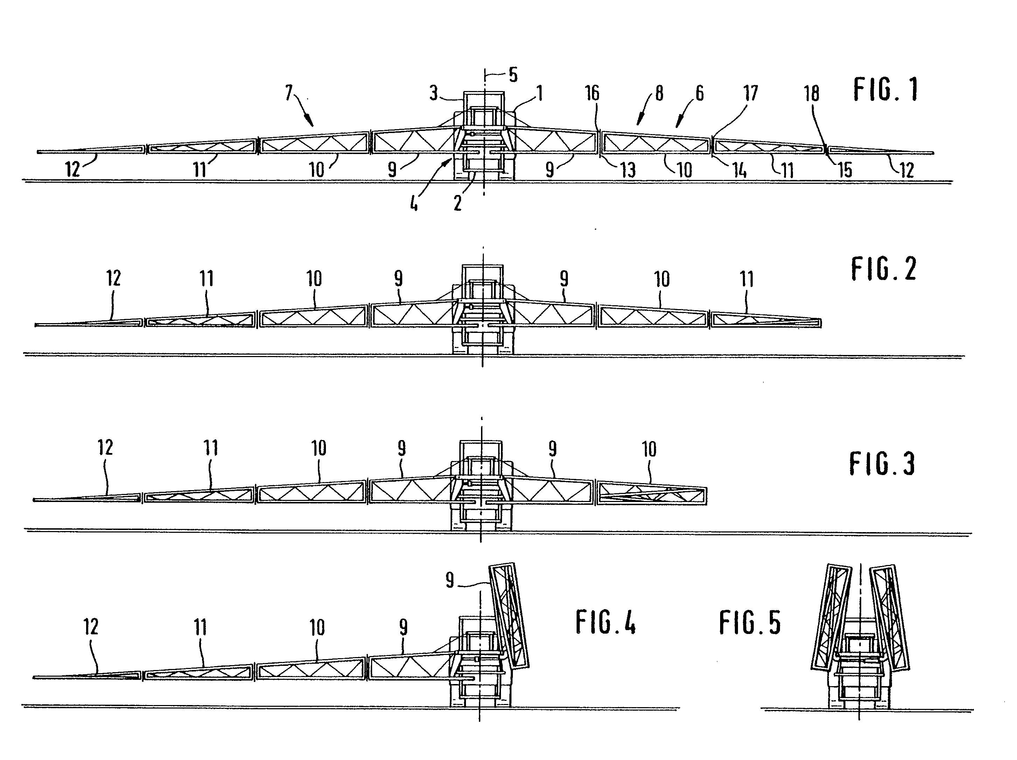

Die einzelnen Verteilerabschnitte 9, 10, 11 und 12 sind über zwischen diesen Abschnitten angeordnete, als elektrische Stellmotore 25 und 26 oder als hydraulische Stellmotore 33 und 51 ausgebildete Betätigungsvorrichtung gelenkig miteinander verbunden. Hierbei ist die Betätigungsvorrichtung zum Zusammenfalten des Verteilergestänges 8 zwischen dem innersten Abschnitt 9 und dem Rahmenmittelteil 4 sowie zwischen dem innersten Abschnitt 9 und dem diesem benachbarten Abschnitt 10 als Hydraulikzylinder 33 bzw. 51 ausgebildet, während die Betätigungsvorrichtung zwischen den übrigen Abschnitten 10 und 11 bzw. 11 und 12 jeweils die Elektromotore 25 bzw. 26 aufweist. Diese Betätigungsvorrichtung 25, 26, 33 und 51 sind derart über eine Steurvorrichtung zu betätigung, daß beim Einklappen die Abschnitte 12, 11, 10 und 9 des Verteilergestänges 8 von außen nach innen nacheinander eingeklappt werden, während beim Ausklappen die Abschnitte 9, 10, 11 und 12 des Verteilergestänges 8 von innen nach außen nacheinander ausgeklappt werden. Hierdurch ist es möglich, daß sich die Verteilerarme 6 und 7 des Verteilergestänges 8 auch abschnittsweise Einklappen lassen. In Fig. 2 ist beispielsweise nur der äußere Abschnitt 12 des Verteilerarmes 6 eingeklappt. Eine Betätigung des Elektromotors 26 führt dazu, daß der Verteilerarmabschnitt 12 eine Schwenkbewegung um die aufrechte Achse 15 in Pfeilrichtung 56 ausführt. Die Fig. 3 zeigt das Verteilergestänge 8, bei dem die beiden äußeren Verteilerarmabschnitte 12 und 11 des Verteilerarmes 6 eingeklappt sind. Hierbei wird der Auslegerabschnitt 11 um die aufrechte Achse 14 in Pfeilrichtung 57 an den Auslegerabschnitt 10 herangeschwenkt, nachdem der Verteilerarmabschnitt 12 an den Verteilerarmabschnitt 11 entsprechend Fig. 2 herangeklappt ist.

Soll nun der entsprechend Fig. 3 eingeklappte Verteilerarm 6 weiter eingeklappt werden, wird der Hydraulikzylinder 51 mit Drucköl beaufschlagt. Die Beaufschlagung des Hydraulikzylinders 51 mit Drucköl bewirkt, daß die Kolbenstange dieses Hydraulikzylinders 51 ausfährt, was zu einer Spannung der Abspannvorrichtung 49 führt. Hierbei werden die entsprechend Fig. 3 eingeklappten Verteilerarmabschnitte 10, 11 und 12 um die aufrechte Achse 13 an den innersten Auslegerabschnitt 9 herangeschwenkt, da die translatorische Bewegung des Hydraulikzylinders 51 mittels des Kettenrades 19 in eine Drehbewegung umgewandelt wird, die dazu führt, daß die an den Verteilerarmabschnitten 10 herangeklappten Verteilerarmabschnitte 11 und 12 in Pfeilrichtung 58 verschwenkt werden. Gleichzeitig wird die Zugfeder 50 beim Heranfalten der Abschnitte 10, 11 und 12 den Abschnitt 9 derart vorgespannt, daß sich eine Gewichtsentlastung beim Einfalten der beiden innersten Verteilerarmabschnitte ergibt. Dieses führt dazu, daß sich die zu einem kompakten Paket zusammengefalteten Verteilerarme 6 und 7 unter geringem Kraftaufwand bei Beaufschlagung des Hydraulikzylinders 33 mit Drucköl um die annähernd in Fahrtrichtung verlaufende Schwenkachse 29 in die Transportstellung gemäß Fig. 4 überführen läßt.

Dieses Einfalten der Verteilergestänge 6 und 7 kann sowohl unabhängig voneinander als auch gemeinsam erfolgen. Beim gleichzeitigen Einfalten der Verteilerarme 6 und 7 erfolgt das Einklappen der einzelnen Verteilerarmabschnitte 9, 10, 11 und 12 in annähernd syncroner Weise. Werden beide zu einem kompakten Paket zusammengefalteten Verteilerarme 6 und 7 in die Transportstellung verschwenkt, nehmen die Verteilerarme 6 und 7 die Position gemäß Fig. 5 ein

Zum Einklappen der Verteilerarme sei noch gesagt, daß beim Einklappen einzelner Verteilerarmabschnitte während des Spritzvorganes eine automatische Abschaltung der Zufuhr der Spritzmittel zu den Düsenleitungen der jeweils eingeklappten Verteilerarmabschnitte automatisch unterbrochen wird.

Damit die Verteilerarme 6 und 7 unabhängig voneinander, d.h. unsymetrisch zueinander ein- bzw. ausgefaltet werden können, sind zwischen der Stange 35 und dem Rahmenmittelteil 4 Arretierungselemente 59 zur Fixierung der Stange 35 und zum Arretieren des Verteilergestänges 8 vorgesehen. Die Verteilerarme 6 und 7 sind über die Stange 35 miteinander verbunden, wobei die Stange 35, in dem Halterungsrohr 39 in Pfeilrichtung 60 beweglich gelagert. Damit das Rahmenmittelteil 4 nicht all zu sehr durch das pendelnde Verteilergestänge 8 belastet wird, sind zwischen der Stange 35 und dem Rahmenmittelteil 4 die als Federn 61 ausgebildeten Dämpfungselemente angeordnet. Gleichzeitig sind die Verteilerarme 6 und 7 mittels dieser Federn 61 nachgiebig gegeneinander abgestützt. Diese Federn 61 befinden sich im Inneren des Halterungsrohres 39. Eine Bewegung der Stange 35 in Pfeilrichtung 60 muß also immer gegen die Federkraft der jeweiligen Feder 61 ausgeführt werden.

Da es durch das unsymetrische Ein- bzw. Ausklappen der Verteilerarme 6 und 7 zueinander zu unsymetrischen Gewichtsverhältnissen zwischen der rechten und linken Seite des Verteilergestänges 8 kommt, neigt das Gestänge dazu, daß sich der jeweils ganz oder mehr ausgeklappte Verteilerarm 7 derart schräg stellt, daß das äußere Ende des Verteilerarmes 7 evtl. auf die Bodenoberfläche aufschlagen könnte. Aus diesem Grunde besitzt die die beiden Verteilerarme 6 und 7 verbindende Stange 35 die Arretierungselemente 59. Diese Arretierungselemente 59 sind einmal im Halterungsrohr 39 angeordnet, welches über die Halterung 40 mit dem Rahmenmittelteil 4 verbunden ist und zum anderen ist das Arretierungselement 59 auf der Stange 35 befestigt. Diese Arretierungselemente 59 sind als Zahnstangen 62 und 63 ausgebildet. Sollen nun die Verteilerarme 6 und 7 unsymetrisch zueinander ein- bzw. ausgefaltet werden, erfolgt eine Arretierung der Stange 35 in der Weise, daß sie keine Relativbewegung in Pfeilrichtung 60 gegenüber dem Rahmenmittelteil 4 mehr ausführen kann. Hierzu wird der Zugmagnet 64 mit Strom beaufschlagt, so daß die Zugstange 65 sich in Pfeilrichtung 66 bewegt. Hierbei wird die in dem Halterungsrohr 39 angeordnete Zugstange 62 des Arretierungselementes 59 derart in Pfeilrichtung 67 bewegt, daß sie mit der Zahnstange 62 der Stange 35 zusammenwirkt. Hierdurch wird gewährleistet, daß sich das Verteilergestänge nicht durch unsymetrische Gewichtsverhältnisse der unsymetrisch zueinander ein- bzw. ausgeklappten Verteilerarme 6 und 7 einstellen kann. Es ist aber auch möglich, mittels dieser Stange 35 und den Arretierungselementen 59 eine gewünschte Schrägstellung der Verteilerarme 6 und 7 gegenüber dem Rahmenmittelteil 4 herbeizuführen.

Damit das Verteilergestänge 8 nun auch Pendelbewegungen in Fahrtrichtung ausführen kann, ist die Vorrichtung 68 vorgesehen. Diese Vorrichtung 68 besteht aus der die Verteilerarme 6 und 7 im Bereich der oberen Gelenke 27 der Verteilerarme 6 und 7 verbindenden Stange 69. Diese Stange 69 ist in Fahrtrichtung 28 gesehen in einem Abstand zu den oberen Gelenken 27 der Verteilerarmanlenkung am Rahmenmittelteil 4 angeordnet. Die Stange 69 ist mittels in Fahrtrichtung verlaufende, und mit dem Rahmenmittelteil 4 verbundene Tragarme 70 in Pfeilrichtung 71 beweglich gelagert, so daß die Stange 69 Bewegungen quer zur Fahrtrichtung 28 ausführen kann. Damit nun die Pendelbewegungen des Verteilergestänges 8 in Fahrtrichtung gedämpft werden, sind zwischen der jeweiligen Verbindungsstelle 72 zwischen den Tragarmen 70 und der die Verteilerarme 6 und 7 verbindenden Stange 69 nicht näher dargestellte Feder- und Dämpfungselemente vorgesehen.

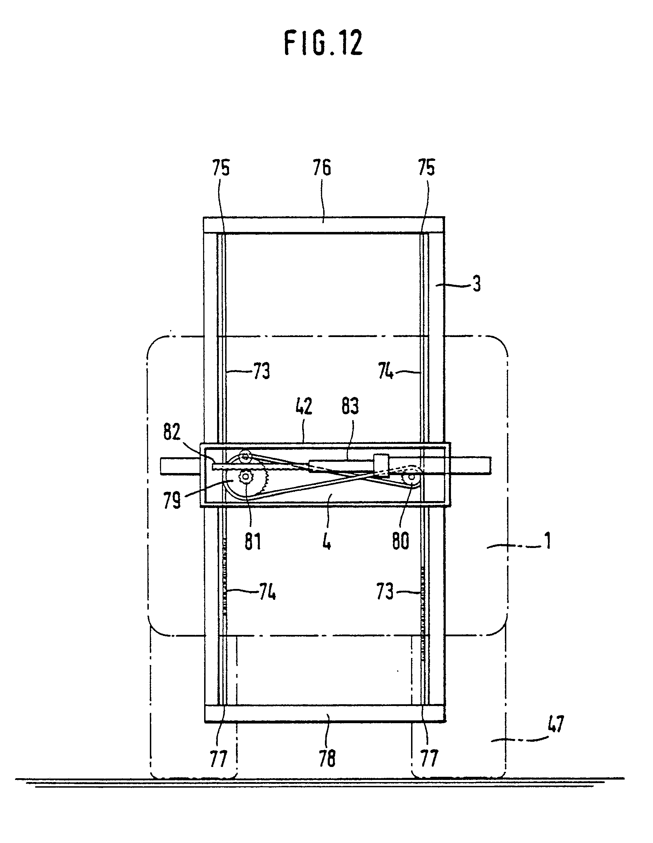

Die Fig. 12 zeigt die als Parallelzwangsführung ausgebildete Höhenverstelleinrichtung 42 für das Verteilergestänge 8. Diese Höhenverstelleinrichtung 42 besteht aus den sich kreuzenden Ketten 73 und 74. Die Ketten 73 und 74 sind mit ihrem Ende 75 an dem oberen Ende der Schiebeführung 3 und mit ihrem anderen Ende 77 am unteren Ende 78 der Schiebeführung 3 befestigt. Am Mittelteil 4 des Verteilergestänges 8 sind im waagerechten Abstand zueinander jeweils die drehfest miteinander verbundenen und drehbar gelagerten Kettenräder 79 und 80 angeordnet. Die drehfest miteinander verbundenen und hintereinander angeordneten, als Doppelkettenrad ausgebildeten Kettenräder 79 weisen die gleiche Größe auf. Die ebenfalls hintereinander und drehfest miteinander verbundenen Kettenräder 80 weisen einen kleineren Durchmesser als die Kettenräder 79 auf, und sind ebenfalls als Doppelkettenräder ausgebildet. Die Ketten 73 und 74 sind unter Kreuzung um diese Kettenräder 79 und 80 herumgeführt. An den Kettenrädern 79 greift die Antriebsverbindung 81 an. Diese Antriebsverbindung 81 ist als mit dem Doppelkettenrad 79 drehfest verbundenes Zahnrad ausgebildet, welches mit der Zahnstange 82 des Hydraulikzylinders 83 zusammenwirkt. Je nach Bewegungsrichtung des Hydraulikzylinders 83 bewegt sich die Höhenverstelleinrichtung 42 entlang der Schiebeführung 3 nach oben oder unten.

**Ansprüche**

1. Landwirtschaftliche Verteilmaschine, wie beispielsweise Feldspritze, mit einem Verteilergestänge, welches über eine Höhenverstelleinrichtung gegenüber dem Rahmen der Verteilmaschine in einer aufrechten Schiebeführung auf-und abbewegbar ist, dadurch gekennzeichnet, daß die Höhenverstelleinrichtung (42) zwei sich kreuzende Ketten (73,74) aufweist, welche jeweils mit ihrem einen Ende (75) an der einen Seite am oberen Ende (76) der Schiebeführung (3) und mit ihrem anderen Ende (77) jeweils auf der gegenüberliegenden Seite (78) der Schiebeführung (3) am unteren Ende (78) der Schiebeführung (3) befestigt sind, daß am Mittelteil (4) des Verteilergestänges (8) im waagerechten Abstand zueinander jeweils drehfest miteinander verbundene und drehbar gelagerte Kettenräder (79,80) angeordnet sind, und daß die beiden Ketten (73,74) unter Kreuzung um diese Kettenräder (79,80) geführt sind.

2. Verteilmaschine nach Anspruch 1, dadurch gekennzeichnet, daß die jeweils miteinander drehfest verbundenen Kettenräder die (79,80) gleiche Größe aufweisen.

3. Verteilmaschine nach einem oder mehreren der vorstehenden Ansprüche, dadurch gekennzeichnet, daß an einem der Doppelkettenräder (79) eine Antriebsverbindung (81) angreift.

4. Verteilmaschine nach einem oder mehreren der vorstehenden Ansprüche, dadurchgekennzeichnet, daß diese Antriebsverbindung (81) als mit dem Doppelkettenrad (79) drehfest verbundenes Zahnrad ausgebildet ist, welches mit einer an einem Hubzylinder (83) angeordneten Zahnstange (82) zusammenwirkt.

5. Verteilmaschine nach einem oder mehreren der vorstehenden Ansprüche, dadurch gekennzeichnet, daß das Zahnrad (81) einen wesentlichen kleineren Durchmesser als die mit ihm drehfest verbundenen Zahnräder (79) aufweist.

FIG. 1

FIG. 2

FIG. 3

FIG. 4

FIG. 5

EP 0 428 963 A1

FIG.6

FIG.7

EP 0 428 963 A1

FIG. 8

73   74   3

B

48

1

49

49   27   29   27   38

4

50   38   50

37

32   34   33   34   32

41   42   40

46   36   37   46

43   44   45   39   35   45   44   43   36

9   9

A

C

47

EP 0 428 963 A1

9

FIG. 9

# FIG. 10

# FIG.11

# FIG.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2533334 (BERTHOUD S.A.) <br> * Figuren 1, 7, 11, 12 * <br> --- | 1 | A01M7/00 |
| A | EP-A-0278926 (SOCIETA ITALO-AMERICANA PRODOTTI ANTIPARASSITARI S.P.A.) <br> * Figur 1 * <br> --- | 1 | |
| A | GB-A-2153194 (NAT. COOPERATIEVE AAN- EN VERKOOPVERENIGING VOOR LAND- EN TUINBOUW G A) <br> * Figuren 1, 2 * <br> --- | 1 | |
| A | MOTORISATION ET TECHNIQUE AGRICOLE <br> no. 50, Februar 1983, Bois-le-Roi, FR <br> Seiten 194 - 227; <br> "Les rampes : des antagonismes à maîtriser" <br> * Seiten 194 - 217 * <br> ----- | 1 | |

**RECHERCHIERTE SACHGEBIETE (Int. Cl.5 )**

A01B
A01C
A01M
B66F

Der vorliegende Recherchenbericht wurde für alle Patentansprüche erstellt

| Recherchenort | Abschlußdatum der Recherche | Prüfer |
|---|---|---|
| BERLIN | 04 MAERZ 1991 | MERCKX A. |

EPO FORM 1503 03.82 (P0403)